**Europäisches Patentamt**

**European Patent Office**

**Office européen des brevets**

(19)

(11) Numéro de publication : **0 110 772**
**B1**

(12) # FASCICULE DE BREVET EUROPÉEN

(45) Date de publication du fascicule du brevet :
**10.09.86**

(21) Numéro de dépôt : **83402246.9**

(22) Date de dépôt : **22.11.83**

(51) Int. Cl.⁴ : **B 23 K 1/19, B 23 K 28/00, B 23 K 1/00, G 01 L 9/00**

(54) **Procédé de soudure et d'étanchéité pour la réalisation de capteurs.**

(30) Priorité : **26.11.82 FR 8219846**

(43) Date de publication de la demande :
**13.06.84 Bulletin 84/24**

(45) Mention de la délivrance du brevet :
**10.09.86 Bulletin 86/37**

(84) Etats contractants désignés :
**CH DE GB IT LI NL SE**

(56) Documents cités :
**DE-C- 719 179**
**US-A- 4 079 508**

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Lombard, Claude**
**60, rue Corneille**
**F-78150 Le Chesnay (FR)**
Inventeur : **Morvan, Olivier**
**6, Chemin de la Pelude Les Facultés - B 4**
**F-31400 Toulouse (FR)**

(74) Mandataire : **Colas, Jean-Pierre et al**
**Cabinet de Boisse 37, avenue Franklin Roosevelt**
**F-75008 Paris (FR)**

Jouve, 18, rue St-Denis, 75001 Paris, France

## Description

La présente invention a pour objet un procédé d'assemblage de capteurs du genre ayant une cavité située entre deux de ses composants, comprenant au moins une plaque d'un premier matériau du type verre ou vitrocristallin et une plaque d'un second matériau tel que le silicium, suivant lequel les deux plaques placées l'une contre l'autre sont soudées entre elles par l'effet de la chaleur et d'une tension électrique qui leur est appliquée.

Le brevet US-A-4 079 508 décrit un tel procédé appliqué à la soudure verre sur silicium, qui est la plus connue. Suivant ce procédé, les plaques de verre et de silicium sont mises en contact, l'ensemble est placé dans une chambre ayant une pression ajustable puis est chauffé, et une tension électrique est appliquée entre le verre et le silicium pour effectuer une soudure.

La présente invention vise à éliminer les inconvénients de ce procédé connu en permettant de réaliser la soudure des composants précités dans une large gamme de températures, sans déformation des composants, même à une température qui est celle de ramollissement du verre.

A cet effet, l'invention a pour objet un procédé du genre précité comprenant les étapes suivantes :

les plaques du premier et du second matériau sont mises en contact,

l'ensemble est placé dans une chambre ayant une pression ajustable,

l'ensemble est chauffé,

une tension électrique est appliquée entre la plaque du premier matériau et la plaque du second matériau pour effectuer une soudure, caractérisé en ce que l'étape de chauffage est réalisée à l'aide d'un bain de métal fondu recevant les composants à assembler qui flottent à sa surface, ce bain étant placé dans la chambre à l'intérieur de laquelle règne un vide partiel.

De préférence, le métal fondu est de l'étain.

L'utilisation d'un bain d'étain pour la fabrication en continu de verre plat est bien connue depuis la mise au point du procédé par la société anglaise Pilkington. Toutefois, l'objet de la présente invention est différent en ce sens qu'il s'agit, non d'élaborer un verre, mais de réaliser une soudure sous vide entre un matériau du type verre ou vitrocristallin et un matériau différent, les pièces soudées restant adhérentes entre elles après l'opération. De plus, dans le procédé objet de la présente invention, le matériau du type verre ou vitrocristallin n'est pas nécessairement en contact direct avec le métal fondu. Ce procédé convient particulièrement à l'utilisation d'une plaque très mince de matériau du type verre ou vitrocristallin.

Suivant un mode préféré de réalisation, un gaz réducteur sous faible pression est présent dans la chambre. Ceci permet, dans le cas où l'une des plaques est en silicium, d'éviter la formation d'une couche plus ou moins épaisse de bioxyde de silicium à la surface de celui-ci. Cette couche a en effet pour inconvénient de modifier plus ou moins, suivant son épaisseur, les conditions de soudure et notamment la température.

L'invention sera maintenant décrite en se référant aux figures annexées non limitatives du procédé et données à titre indicatif.

La figure 1 est un exemple de pièces de capteur à assembler par soudure électrostatique. Les pièces représentées en coupe sont celles d'un capteur à variation de capacité suivant la pression ambiante.

La figure 2 est la coupe d'un dispositif mettant en œuvre le procédé objet de l'invention pour une fabrication discontinue.

La figure 3 est un exemple de pièces à assembler différent de celui de la figure 1 en ce sens que le verre de scellement ne sera pas en contact avec le métal liquide.

La figure 4 est la coupe d'un dispositif mettant le procédé en œuvre pour une fabrication en continu.

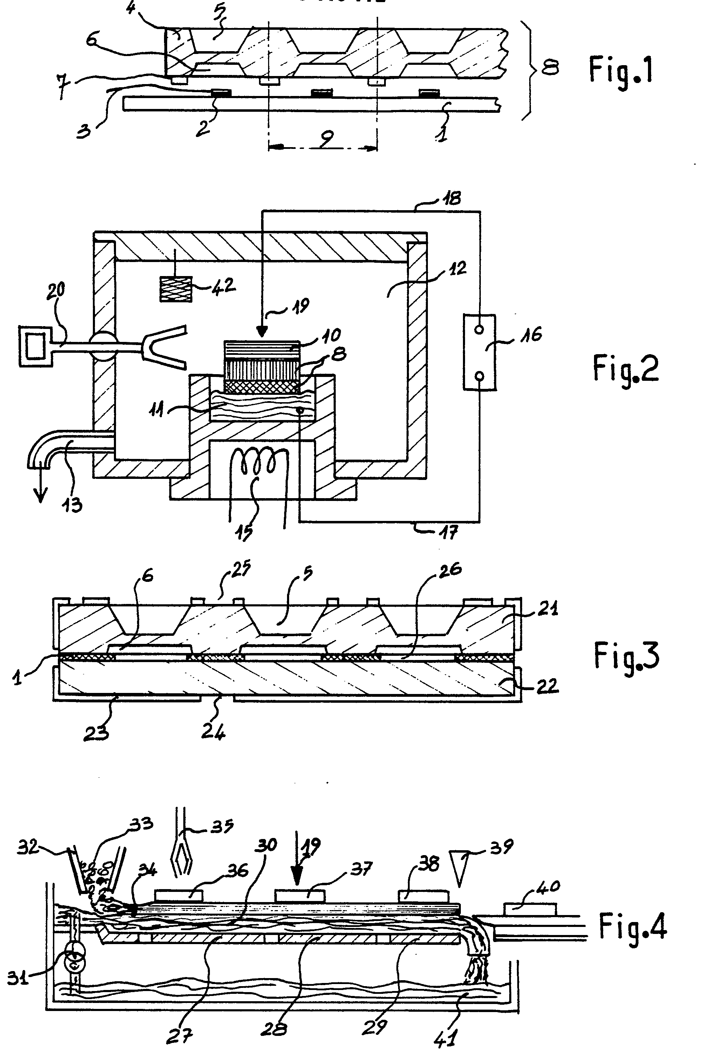

Les pièces de capteur à assembler de la figure 1 se composent d'une plaque de verre 1 portant des métallisations 2 ayant des prolongements 3. En regard de cette plaque est déposée une tranche de silicium 4 portant de multiples cavités 5 & 6 ainsi que des cales 7 qui peuvent être en oxyde de silicium. L'ensemble des pièces à assembler constitue le sous ensemble 8. Après soudure, chaque élément 9 portant une cavité de la pièce 8 sera séparé des autres par sciage, découpe au diamant, etc... pour donner autant de capteurs.

L'ensemble 3, éventuellement recouvert d'un poids plat 10 sera placé à la surface d'un bain d'étain 11 lui-même situé dans une enceinte 12 qui peut être vidée d'air par une conduite 13. Un élément 15 amène le bain d'étain à la température désirée. Une source de tension 16 est reliée d'une part au bain d'étain 11 par une connexion 17 et par une autre connexion 18 à un moyen électrique 19 de liaison entre l'ensemble 8 et la connexion 18. Ce moyen peut être un contact électrique, un fil d'or soudé, une pointe émettrice d'ions, un canon à électrons, etc...

L'enceinte 12 peut être remplie par un gaz réducteur sous faible pression, azote hydrogéné par exemple, pour réduire les oxydes présents et éviter la création de nouveaux tant sur les pièces à assembler que sur le bain d'étain.

Un bras manipulateur 20 orientable permet le cas échéant de sortir l'ensemble 8 du bain d'étain ou de verser le contenu d'un récipient 42 contenant du verre à la surface du bain d'étain avant l'apport d'éléments à assembler.

La figure 3 est un exemple d'un autre capteur dans lequel la plaque de verre 1 est placée en sandwich entre deux plaques de silicium 21 et 22. S'il y a lieu, ces plaques sont protégées à l'extérieur par une couche d'oxyde de silicium 23 dans laquelle sont pratiquées des découpes 24 & 25 pour assurer des liaisons électriques. Le cas échéant, la plaque de verre 1 comporte des découpes 26 au droit des cavités 6.

La figure 4 est la représentation d'une machine permettant la réalisation de capteurs en fabrication continue.

Sur une sole légèrement inclinée composée de 3 sections 27, 28, 29 à des températures différentes, coule un bain d'étain 30 alimenté par une pompe 31 qui peut être du type électromagnétique. Une trémie 32 contenant du verre en poudre 33 permet la flottation d'une couche de verre fondu 34 à la surface du bain d'étain 30. Un manipulateur 35 permet de déposer les éléments à assembler 36, 37, 38 sur le bain de verre fondu. Un séparateur 39 permet d'isoler des sections de verre portant l'élément assemblé 40, tandis que l'étain retourne dans un bac 41. Des moyens de liaison électrique 19 sont prévus.

Le fonctionnement de l'équipement décrit figure 2 est très simple en ce sens qu'il suffit d'introduire soit le vide, soit une faible pression de gaz réducteur à l'enceinte, de régler la température du bain de métal liquide à la ou les températures voulues tout en appliquant la tension électrique nécessaire entre le bain de métal et l'agent de liaison électrique 19.

Le bain de métal liquide sert à la fois de support parfaitement horizontal souple, de moyen de liaison thermique, de moyen de liaison électrique. Il autorise l'utilisation de feuilles de verre extrèmement minces ou même la fabrication de cette feuille au moyen de poudre ou de morceaux déposés par le bras manipulateur 20 sur le bain d'étain 11. Il est donc loisible de régler les compositions du verre suivant les besoins et notamment pour ajuster le coefficient de dilatation thermique en mélangeant des produits différents dans le bac 42. On pourra avec bonheur utiliser des produits vitrocristallins à la place du verre.

Le capteur décrit figure 3 peut notamment être réalisé de la manière suivante : fabrication d'une couche de verre mince à la surface du bain d'étain, pose de la plaque de Silicium 22, retournée par rapport à la figure 3, soudure électrostatique du verre 1 sur 22, retournement, pose de la plaque de silicium 21 dans la position décrite figure 3, plaque 21 au dessus.

Le fonctionnement de l'équipement décrit figure 4 est très voisin de celui de l'équipement correspondant à la figure 2 avec des phases successives de réalisation d'une feuille de verre, pose de l'élément à souder, passage par des zones de température avec application d'un champ électrique de quelques dizaines à quelques milliers de volts, découpe de la plaque, stockage, le tout sous vide ou faible pression.

Le même équipement peut aussi être utilisé de façon différente en remplaçant le verre en poudre 33 dans le trémie 32 par un rouleau de verre plat et même aussi dans une technologie futuriste en remplaçant les plaques 36, 37, 38 par un ruban de silicium du type de ceux qui sont expérimentés pour les piles photo-voltaïques.

Le même bain d'étain ou de métal fondu peut être utilisé pour la soudure de capteurs dans lesquels le verre n'est pas en contact direct avec l'étain. Ces capteurs peuvent être par exemple de type décrit figure 3.

On notera que pour la réalisation de capteurs de pression le vide est obtenu directement en même temps que le scellement.

## Revendications

1. Procédé d'assemblage de capteurs ayant une cavité (6) située entre deux de ses composants, comprenant au moins une plaque (1) d'un premier matériau du type verre ou vitrocristallin et une plaque (4 ; 21 ; 22) d'un second matériau tel que le silicium soudées entre elles, ce procédé comprenant les étapes suivantes :

les plaques du premier et du second matériau sont mises en contact,

l'ensemble est placé dans une chambre (12) ayant une pression ajustable,

l'ensemble est chauffé,

une tension électrique est appliquée entre la plaque (1) du premier matériau et la plaque (4 ; 21 ; 22) du second matériau pour effectuer une soudure,
caractérisé en ce que l'étape de chauffage est réalisée à l'aide d'un bain de métal fondu (11, 30) recevant les composants à assembler qui flottent à sa surface, ce bain étant placé dans la chambre (12) à l'intérieur de laquelle règne un vide partiel.

2. Procédé selon la revendication 1, caractérisé en ce que le métal fondu est de l'étain.

3. Procédé selon l'une quelconque des revendications 1 et 2, caractérisé en ce qu'un gaz réducteur sous faible pression est présent dans la chambre (12).

4. Procédé selon l'une quelconque des revendications 1 à 3, caractérisé en ce que la tension électrique est appliquée entre les composants à assembler (1, 4 ; 21, 22) par l'intermédiaire du bain de métal fondu (11, 30) et d'au moins un moyen de connexion électrique de nature métallique, ionique ou électronique avec le côté opposé des composants à assembler.

5. Procédé selon l'une quelconque des revendications 1 à 4, caractérisé en ce que le bain de métal fondu (11, 30) est parfaitement horizontal et reçoit un ou plusieurs composants à assembler qui sont chargés ou déchargés suivant un processus discontinu.

6. Procédé selon l'une quelconque des revendications 1 à 4, caractérisé en ce que le bain de métal fondu (11, 30) présente une légère déclivité et que les composants assemblés s'écoulent en même temps que le bain suivant un processus continu.

7. Procédé selon l'une quelconque des revendications 1 à 6, caractérisé en ce que le premier matériau est délivré sous forme de poudre ou de débris à la surface du bain de métal fondu, où il se constitue sous forme de plaque (1) par l'effet de la température avant l'étape de mise en contact avec la plaque (4 ; 21 ; 22) du second matériau.

## Claims

1. Method for assembling transducers having a recess (6) located between two of its components comprising at least one plate (1) of a first material of a glass or vitro-crystalline nature and a plate (4 ; 21 ; 22) of a second material such as silicon soldered between them, this method comprising the following stages :
   the plates of the first and second material are brought together,
   the amalgamation is heated,
   an electrical voltage is applied between the plate (1) of the first material and the plate (4 ; 21 ; 22) of the second material to effect soldering, characterised in that the heating stage is effected with the assistance of a bath of molten metal (11, 30) which receives the components to be assembled which float on its surface, this bath being placed in a chamber (12) inside of which there is a partial vacuum.

2. Method according to claim 1 characterised in that the molten metal is of tin.

3. Method according to any of claims 1 and 2 characterised in that a gas reducer under weak pressure is present in the chamber (12).

4. Method according to any of claims 1 to 3 characterised in that the electrical voltage is applied between the components to be assembled (1, 4 ; 21, 22) by the intermediary of a bath of molten metal (11, 30) and at least one means of electrical connection, being metallic, ionic or electronic, with the opposite side of the components to be assembled.

5. Method according to any one of claims 1 to 4 characterised in that the bath of molten metal (11, 30) is perfectly horizontal and receives one or several components to be assembled which are loaded or unloaded following a discontinuous process.

6. Method according to any of claims 1 to 4 characterised in that the bath of molten metal (11, 30) has a slight slope and that the assembled components flow out at the same time as the bath following a continuous process.

7. Method according to any of claims 1 to 6 characterised in that the first material is delivered in the form of powder or waste to the surface of the bath of molten metal, where it constitutes a plate (1) by the action of temperature before the stage of being brought together with the plate (4 ; 21 ; 22) of the second material.

## Patentansprüche

1. Verfahren zum Zusammenfügen von Aufnehmern mit einem Hohlraum (6), der sich zwischen zweien seiner Bestandteile befindet, zu denen mindestens eine Platte (1) aus einem glasigen oder vitrokristallinen Material und eine Platte (4 ; 21 ; 22) aus einem zweiten Material, wie Silicium, gehören, welche Bestandteile miteinander verschweißt sind, mit folgenden Verfahrensschritten :
   die Platten aus dem ersten und dem zweiten Material werden miteinander in Berührung gebracht,
   diese Gesamtheit wird in eine Kammer (12) eingebracht, in der ein einstellbarer Druck herrscht,
   die Gesamtheit wird erhitzt,
   zwischen der Platte (1) aus dem ersten Material und der Platte (4 ; 21 ; 22) aus dem zweiten Material wird zur Erzielung einer Schweißung eine elektrische Spannung angelegt,
   dadurch gekennzeichnet, daß der Verfahrensschritt der Erhitzung mit Hilfe eines Bades (11, 30) aus geschmolzenem Metall ausgeführt wird, das die zusammenzufügenden Bestandteile aufnimmt, die an seiner Oberfläche schwimmen, wobei sich das Bad in der Kammer (12) befindet, in der ein Teilvakuum herrscht.

2. Verfahren nach Anspruch 1, dadurch gekennzeichnet, daß das geschmolzene Metall Zinn ist.

3. Verfahren nach einem der Ansprüche 1 und 2, dadurch gekennzeichnet, daß in der Kammer (12) ein reduzierendes Gas unter schwachem Druck anwesend ist.

4. Verfahren nach einem der Ansprüche 1 bis 3, dadurch gekennzeichnet, daß die elektrische Spannung zwischen den zusammenzufügenden Bestandteilen (1, 4 ; 21, 22) mittels des Bades (11, 30) aus geschmolzenem Metall und mittels mindestens einer elektrischen Verbindung von metallischer, ionischer oder elektronischer Beschaffenheit zu der entgegengesetzten Seite der zusammenzufügenden Bestandteile angelegt wird.

5. Verfahren nach einem der Ansprüche 1 bis 4, dadurch gekennzeichnet, daß das Bad (11, 30) aus geschmolzenem Metall vollkommen horizontal ist und einen oder mehrere zusammenzufügende Bestandteile aufnimmt, die in einem diskontinuierlichen Prozeß eingegeben und entnommen werden.

6. Verfahren nach einem der Ansprüche 1 bis 4, dadurch gekennzeichnet, daß das Bad (11, 30) aus geschmolzenem Metall ein leichtes Gefälle hat und daß die zusammengefügten Bestandteile in einem kontinuierlichen Prozeß zusammen mit dem Bad abfließen.

7. Verfahren nach einem der Ansprüche 1 bis 6, dadurch gekennzeichnet, daß das erste Material in Form eines Pulvers oder in Form von Bruchstücken auf die Oberfläche des Bades aus geschmolzenem Metall aufgegeben wird, wo dieses Material unter dem Einfluß der Temperatur eine Platte (1) bildet, bevor die Platte (4 ; 21 ; 22) aus dem zweiten Material mit dem ersten Material in Berührung gebracht wird.

0 110 772

Fig.1

Fig.2

Fig.3

Fig.4